# FASCICULE DE BREVET EUROPEEN

(11) **EP 2 013 737 B1**
(45) Date de publication et mention de la délivrance du brevet: **30.09.2009**
(21) Numéro de dépôt: 07731180.1
(22) Date de dépôt: 23.03.2007
(51) Int. Cl.: G06F 12/02

(54) **SYSTEME DE GESTION MEMOIRE POUR LA REDUCTION DE LA FRAGMENTATION MEMOIRE**
SPEICHERVERWALTUNGSSYSTEM ZUR VERRINGERUNG DER SPEICHERFRAGMENTIERUNG
MEMORY MANAGEMENT SYSTEM FOR REDUCING MEMORY FRAGMENTATION

(30) Priorité: 31.03.2006 FR 0602849
(43) Date de publication de la demande: 14.01.2009
(73) Titulaire: Infovista SA, 91940 Les Ulis (FR)
(72) Inventeur: CHEDRU, Olivier, F-75015 Paris (FR)
(74) Mandataire: Pontet, Bernard
(86) Numéro de dépôt international: PCT/FR2007/000491
(87) Numéro de publication internationale: WO 2007/118955

(56) Documents cités:
- US-A1- 2002 069 338
- US-B1- 6 182 089
- US-B1- 6 804 761
- LEISERSON / PROKOP / RANDALL: USING DE BRUIJN SEQUENCES TO INDEX A 1 IN A COMPUTER WORD, [Online] 7 juillet 1998 (1998-07-07), XP002414284 Extrait de l'Internet: URL:http://citeseer.ist.psu.edu/cache/pape rs/cs/3312/ftp:zSzzSztheory.lcs.mit.eduzSz pubzSzcilkzSzdebruijn.pdf/leiserson98using .pdf> [extrait le 2006-12-18]

## Description

La présente invention se rapporte à un système de gestion mémoire d'un processus élaboré en langage C/C++ dans une unité de traitement. Elle trouve une application particulièrement intéressante dans des programmes ou applications informatiques à exécution de longue durée ("long-running application") telles que des applications serveurs. Ces applications doivent maintenir l'utilisation de leur mémoire stable dans le temps.

D'une façon générale, il existe deux types d'utilisation de mémoire :
- la quantité de mémoire réellement utilisée par le processus, appelé "heap usage" qui doit être stable, sinon le processus risque de rencontrer des problèmes de mémoire.
- la quantité de mémoire réservée par le système d'exploitation pour le processus, appelé "virtual memory usage". Elle comprend le "heap usage" aussi bien que les bibliothèques et le code de l'application.

La fragmentation de mémoire est la différence entre l'utilisation de mémoire virtuelle et l'utilisation de pile ("heap usage). C'est la mémoire réservée par le système et elle ne contient rien d'utile pour le processus. Elle ne peut pas être nulle, mais doit être maintenue aussi bas que possible. Si la fragmentation de mémoire continue à augmenter, de sérieux problèmes peuvent subvenir :
- à mesure que la mémoire virtuelle augmente, cela met plus de pression sur le système d'exploitation et dégrade l'ensemble des performances, parfois par un facteur très significatif;
- pour des applications fonctionnant en 32 bits, la quantité de mémoire virtuelle disponible est limitée à 4 gigaoctets ou moins, selon la plateforme utilisée. Une telle application manquerait par la suite de mémoire virtuelle et s'interromprait.

Quelques langages de programmation, tels que le Java ou .NET, résout le problème de fragmentation de mémoire en déplaçant des objets dans la mémoire, ainsi ils peuvent "compacter" la pile ("heap"). Un système typique d'allocation mémoire est décrit par US-6 182 089.

Cette solution n'est pas possible avec les applications C ou C++, où les objets ont une adresse fixe dans la mémoire jusqu'à ce qu'ils soient libérés. Les allocateurs C/C++ existants ont notamment un ou plusieurs des faiblesses suivantes : :
- l'allocateur de mémoire par défaut peut ne pas mettre en oeuvre correctement la fragmentation interne en raison d'un algorithme d'assemblage de bloc inadéquat. Si les classes de taille contrôlées par l'allocateur ne conviennent pas aux tailles utilisées par le processus, ceci augmentera la fragmentation interne.
- il peut également ne pas mettre en oeuvre correctement la fragmentation externe en utilisant faible algorithme d'assemblage, "coalescing algorithm" en langue anglaise. L'assemblage de blocs libres est généralement très consommatrice, mais c'est une étape obligatoire afin de limiter la fragmentation externe.

Un des problèmes techniques est donc le fait que la fragmentation consomme du temps et des ressources, ce qui pénalise à terme d'autres applications du système.

La présente invention a pour but de remédier aux inconvénients précités en proposant un nouveau allocateur de mémoire de basse fragmentation pour le C/C++. L'invention a pour but de remplacer l'allocateur de mémoire par défaut fourni avec le système d'exploitation et d'éviter la fragmentation externe. L'invention a encore pour but de maintenir la mémoire virtuelle aussi faible que possible.

On atteint au moins l'un des objectifs précités avec un système de gestion mémoire d'un processus élaboré en langage C/C++ dans une unité de traitement, ce système comprenant :
- un allocateur apte à allouer des espaces mémoires pour des objets utilisés par le processus et à libérer des espaces mémoires non utilisés par le processus vers le système d'exploitation de l'unité de traitement;
- un mécanisme asynchrone apte à définir une zone tampon constituée d'un ensemble de blocs mémoires disponibles pour le processus, tous les blocs mémoires dudit mécanisme étant de même taille égale à m*32Ko, avec m compris entre 1 et 4;
- chaque bloc mémoire de m*32Ko, en provenance dudit mécanisme et utilisé par le processus, est géré sous forme de régions mémoire selon la technique de gestion de mémoire "chunk" par l'allocateur;
pour de grands objets ("large object" en anglais) dont la taille est comprise dans une plage de tailles prédéterminée, chaque bloc mémoire de m*32Ko est considéré comme un chunk multi-tailles renfermant plusieurs desdits grands objets de différentes tailles, ledit chunk multi-tailles comportant un en-tête indiquant qu'il s'agit d'un chunk renfermant de grands objets, un champ de bits ou "bit fields", et une zone de données comprenant des petits blocs mémoire en cours d'utilisation et de petits blocs mémoires libres, les petits blocs mémoire du chunk multi-tailles étant tous de même taille; l'allocateur comprenant des moyens de mise en oeuvre de l'algorithme de Bruijn en combinaison avec la technique de champ de bits pour déterminer des blocs adjacents libres lors de la libération d'un petit bloc mémoire par le processus.

Plus précisément, lorsqu'un petit bloc mémoire est libéré par le processus, l'allocateur recherche s'il existe des petits blocs libres adjacents de façon à les assembler ("coalescing") et constituer ainsi un plus gros bloc à libérer. L'algorithme de Bruijn, que l'on peut trouver dans le document "Using de Bruijn Sequences to Index a 1 in a Computer Word", Charles E. Leiserson, Harald Prokop, Keith H. Randall, MIT Laboratory for Computer Science, Cambridge, MA 02139 USA, July 7, 1998 , intervient dans la recherche de blocs adjacents libres en combinaison avec le champ de bits. Cette technique permet d'accélérer la recherche et donc de libérer rapidement de la mémoire vers le système d'exploitation tout en limitant la fragmentation.

La présente invention apporte bien une réponse technique à un problème technique.

Les dits grands objets ont une taille inférieure à m*32Ko (kilo-octets).

Avec le système selon l'invention, l'allocateur réserve seulement de faibles plages de mémoire et ces plages sont rendues au système lorsqu'elles deviennent vides. Ainsi, on garde la mémoire virtuelle du processus aussi bas que possible. Au contraire, dans les systèmes de l'art antérieur; les allocateurs réservent une plage étendue d'espace adresse et contrôlent leurs blocs mémoires dans cette plage. Cette plage d'espace adresse ("heap"), selon l'art antérieur, se développe si nécessaire; l'inconvénient étant le fait que la mémoire n'est jamais renvoyée vers le système, l'utilisation de la mémoire virtuelle du processus pouvant ainsi augmenter, ceci augmentant la pression mémoire du côté système.

Dans le système selon la présente invention, le mécanisme asynchrone, appelé "free store", constitue une zone tampon dans laquelle on garde à disposition de l'allocateur un ensemble de blocs mémoire. Le nombre de ces blocs varie entre une valeur min et une valeur max. Plus précisément, le mécanisme asynchrone comprend des moyens pour réserver un bloc mémoire de m*32Ko lorsqu'un seuil minimum du nombre de blocs mémoire est dépassé, et des moyens pour libérer vers le système d'exploitation des blocs mémoire de m*32Ko lorsqu'un seuil maximum du nombre de blocs mémoire est dépassé.

La présente invention est notamment remarquable par le fait que le mécanisme asynchrone réserve de la mémoire par bloc mémoire de m*32Ko, m peut être avantageusement égale à 2. On alloue au processus de la mémoire par bloc mémoire de 64Ko. Ainsi, en travaillant avec des blocs mémoire de 64Ko par exemple, on utilise peu de mémoire virtuelle et l'allocateur peut gérer ces blocs mémoire de manière plus rapide. La taille de bloc mémoire peut être paramétrée en fonction des contraintes du système d'exploitation et du type d'application. Par exemple, on peut utiliser 128Ko au lieu de 64Ko pour une application 64 bits.

De préférence, chaque petit bloc mémoire présente une taille de 8 octets. Lorsqu'un objet ne présente pas une taille multiple de 8 octets, on arrondit la taille de l'objet à la taille multiple de 8 octets immédiatement supérieure.

Selon une caractéristique avantageuse de l'invention, chaque petit bloc mémoire en cours d'utilisation par le processus comporte une zone renfermant l'objet en cours d'utilisation et un en-tête indiquant la taille dudit objet en cours d'utilisation.

Par ailleurs, chaque petit bloc mémoire libre peut comporter un lien vers le petit bloc mémoire libre précédent, un lien vers le petit bloc mémoire suivant, et un espace mémoire libre pour des données.

Le système selon l'invention comprend en outre une liste dite liste libre de grands objets, dans laquelle sont répertoriés, pour chaque taille de ladite plage de tailles prédéterminée, des liens vers des petits blocs mémoire libres dans des chunks multi-tailles.

Selon une caractéristique avantageuse de l'invention, ladite plage de tailles prédéterminée consiste en une plage telle que 256 octets< taille objet ≤ à m*32Ko. Les objets dont la taille obéit à cette formule sont appelés grands objets ou "large objects" en anglais.

Par ailleurs, on peut définir de petits objets comme étant des objets dont la taille est inférieure ou égale à 256octets. La limite de 256 octets pour les petits objets peut être ajustée en fonction de la taille des objets que le processus manipule. Pour de tels objets, chaque bloc mémoire de m*32Ko devant être utilisé est subdivisé en une pluralité de page chunks ou régions; chaque page chunk comportant un en-tête renfermant la taille des objets et une indication du caractère vide ou non du page chunk, et plusieurs petits blocs mémoires de même taille, chaque petit bloc mémoire étant libre ou rempli d'objet. Avantageusement, le système comprend en outre une première liste libre de petits objets associée à l'ensemble de page chunks de telle sorte que pour chaque taille d'objet des liens vers des petits blocs mémoire libres sont établis. Le système comprend en outre pour chaque page chunk, une seconde liste libre interne de petits objets, cette liste libre interne comprenant des liens entre objets et petits blocs mémoires libres au sein d'un même page chunk; lesdites première et seconde listes libres de petits objets sont gérées par l'allocateur pour l'allocation et la libération de mémoire. La gestion de petits objets ("small objects") ne nécessite donc pas la technique de recherche de blocs adjacents libres. Les deux listes ainsi définies permettent d'établir un chaînage entre blocs de mémoires.

Avantageusement, pour libérer un objet, l'allocateur comprend des moyens pour réaliser l'opération "adresse de l'objet à libérer" modulo "m*32Ko" de façon à en déduire la taille dudit objet à libérer.

Selon l'invention, l'allocateur comprend des moyens pour libérer un bloc mémoire de m*32Ko vers le système d'exploitation lorsque l'ensemble des page chunks de ce bloc mémoire sont vides.

En complément notamment de ce qui précède, pour de très grands objets de tailles supérieures à m*32Ko, l'allocateur comprend des moyens pour prélever depuis le mécanisme asynchrone plusieurs blocs mémoire de taille m*32Ko chacun de façon à former un chunk surdimensionné, chaque chunk surdimensionné comportant un en-tête signalant qu'il s'agit d'un chunk comportant un objet de très grande taille.

D'autres avantages et caractéristiques de l'invention apparaîtront à l'examen de la description détaillée d'un mode de mise en oeuvre nullement limitatif, et des dessins annexés, sur lesquels :
La figure 1 est une vue schématique de l'évolution mémoire d'un processus dans le temps,
La figure 2 est une vue schématique du principe d'assemblage de blocs mémoire libres,
La figure 3 est une vue schématique générale des composants applicatifs mis en oeuvre,
La figure 4 est une vue schématique d'un bloc mémoire 64Ko renfermant une pluralité de page chunks pour petits objets,
La figure 5 est une vue schématique d'une liste libre externe pour petits objets,
La figure 6 est une vue schématique d'un bloc mémoire 64Ko sous forme d'un seul chunk (ou région mémoire de taille fixe) pour grands objets de tailles différentes,
La figure 7 est une vue schématique d'une liste libre pour grands objets,
La figure 8 est une vue schématique d'un procédé d'assemblage de blocs mémoires libres selon l'invention, et
La figure 9 est une vue schématique d'un bloc mémoire surdimensionné pour très grands objets.

Bien que l'invention n'y soit pas limitée, on va maintenant décrire un système selon la présente invention pour un allocateur de type 32bits. L'homme du métier comprendra qu'il aisé d'étendre la présente solution à une application de type 64 bits, notamment en ajustant m dans la taille de bloc m*32Ko.

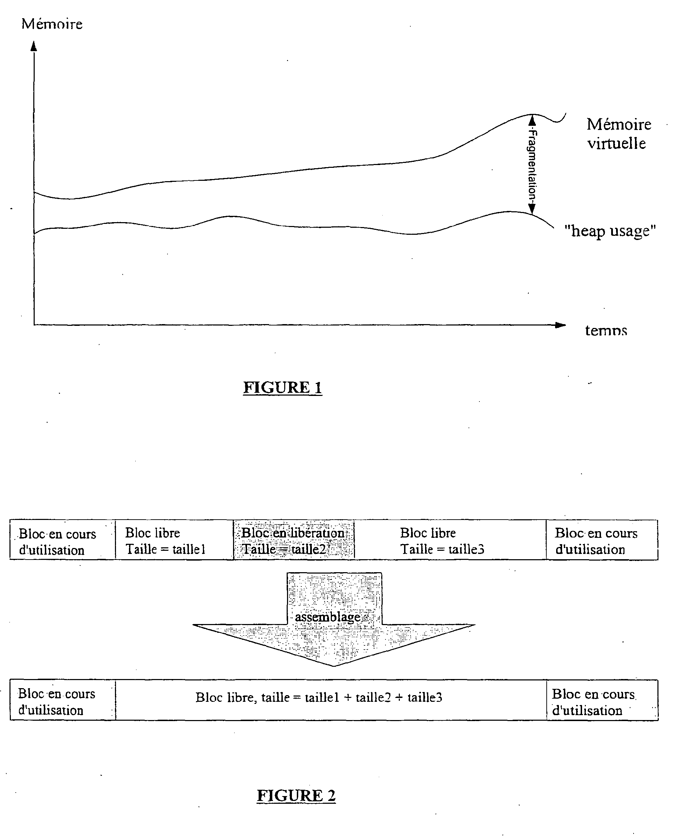

Sur la figure 1, on voit un graphe comportant deux courbes. La courbe inférieure représente l'utilisation de la pile "heap usage", et la courbe supérieure représente la mémoire virtuelle. L'écart entre les deux courbes est la fragmentation. Une façon de limiter la fragmentation est de réaliser l'assemblage ("coalescing" en anglais). Comme on peut le voir sur la figure 2, il s'agit de regrouper un bloc mémoire venant d'être libéré avec des blocs mémoires libres adjacents.

L'allocateur selon l'invention distingue trois types d'objets : les grands objets ("large objects"); les petits objets ("small objects") et les très grands objets ("huge objects").

Pour éviter la fragmentation d'espace adresse, un facteur important dans un processus de type 32 bits où l'espace adresse disponible est rare, on utilise des mémoires tampons à taille fixe (taille réglée à 64Ko). Pour allouer les très grands objets, on alloue des tampons mémoire plus grands (taille fixée à n x 64Ko).

Ces mémoires tampons sont alloués en utilisant des primitives bas niveau du système d'exploitation et doivent être alloués à des adresses multiples de 64Ko.

Les tailles d'objet.

La norme de C exige que l'adresse d'un objet soit alignée sur la limite d'un mot de 8octets. Cela signifie que l'allocateur peut arrondir la taille de l'objet jusqu'à limite des 8 octets suivants, réduisant ainsi le nombre de "classes taille" à gérer.

L'allocateur selon l'invention définit trois types d'objets selon les tailles suivantes :
- petits objets : taille ≤ 256 octets
- grands objets : taille > 256 octets et taille s limite (la limite est sensiblement égale à 63Ko)
- très grands objets : taille > limite.

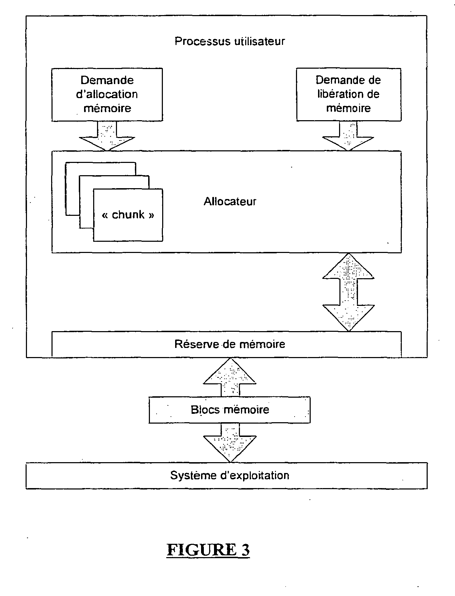

Sur la figure 3 on voit schématiquement la façon dont différents applicatifs du système s'interfacent. Le mécanisme asynchrone est une zone tampon qui délivre des blocs mémoires qui sont gérés par l'allocateur. Ce dernier reçoit des instructions du système d'exploitation et du processus pour allouer ou libérer des blocs mémoires.

Les fonctions de l'allocateur.

L'allocateur fournit une interface comprenant deux fonctionnalités :
- allouer un objet : l'allocateur reçoit la taille de l'objet et doit renvoyer l'adresse de l'objet. Il arrondit la taille de l'objet jusqu'à la limite du bloc 8 octets supérieur. Il détermine alors si l'objet est petit, grand ou très grand et gère l'objet en conséquence.
- Libérer un objet : l'allocateur reçoit l'adresse de l'objet. Pour obtenir la taille de l'objet à partir de l'adresse de l'objet, l'allocateur arrondit l'adresse de l'objet à la limité de la mémoire 64Ko précédent, et lit la valeur stockée à cette adresse arrondie. Cette valeur est un indice concernant la taille de l'objet :
   ■ si la valeur est zéro, il s'agit d'un grand objet,
   ■ si la valeur est ≤ 256, c'est un petit objet,
   ■ autrement, c'est un très grand objet.

L'allocateur permet de rendre de la mémoire inutilisée vers le système d'exploitation autant que possible, et de fusionner des blocs libres de manière très efficace en utilisant la technique de champ de bits et l'algorithme de Bruijn.

Les fonctions du mécanisme asynchrone ("free store") :

Le "free store" ou réserve de mémoire est un mécanisme asynchrone (fonctionnant selon des routines propres) exécutant la gestion bas niveau de mémoire en utilisant les primitifs du système d'exploitation. Il maintient continuellement une liste de tampons mémoire 64Ko (plus que la taille minimum du "free store") pour satisfaire immédiatement aux besoins de l'allocateur lorsque de nouveaux "page chunks" (régions mémoires fixes) ou un nouveau "chunk" (région fixe) pour de grands objets doivent être alloués. Réciproquement, il retarde la destruction des mémoires tampons 64Ko et la libération de page chunks vides jusqu'à ce que la taille maximum du "free store" soit atteinte. De cette façon, des opérations de mémoire de bas niveau ont un impact minimum sur les performances de l'allocateur.

Les routines du "free store" attendent un sémaphore devant être signalé par l'allocateur pour nettoyer des mémoires tampons lorsque la taille du "free store" est au-dessus de la taille maximum, et pour pré-allouer des mémoires tampons 64Ko lorsque la taille du "free store" est inférieure à la taille minimum.

Des mémoires tampons surdimensionnés sont alloués à chaque fois que cela est nécessaire, et sont détruits dès qu'ils sont libérés.

Des mémoires tampons contenant des page chunks (pour de petits objets) sont détruites seulement lorsque tous les pages chunks sont déliés de la mémoire et lorsque le page chunk de tête est vide.

On va maintenant décrire la gestion de petits objets.

En ce qui concerne la structure.

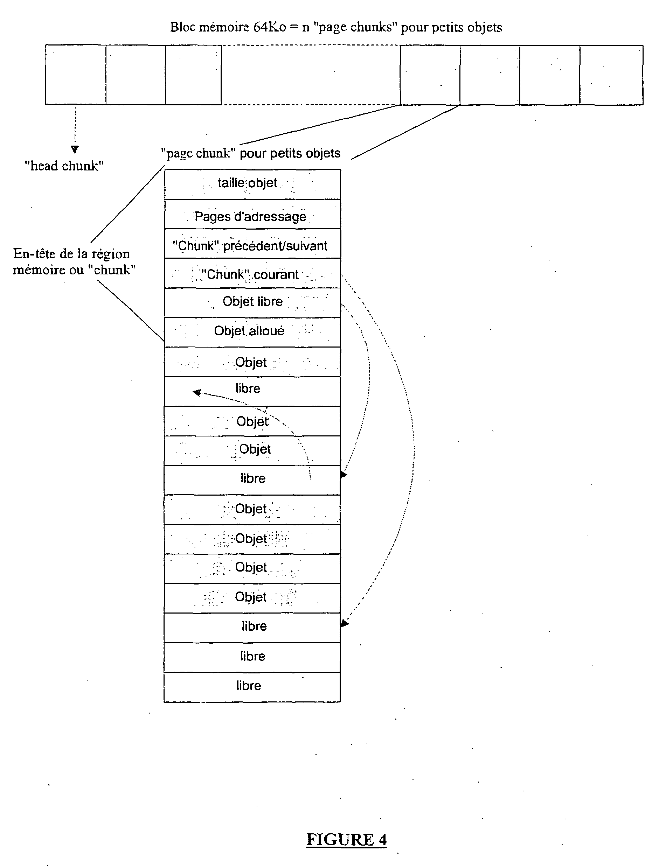

Pour de petits objets, on doit limiter au maximum la charge mémoire. Pour ce faire, on utilise la technique des "page chunks" pour stocker de petits objets de la même classe de taille. Un "page chunk" est une zone mémoire comprenant un en-tête et une partie data. Pour les petits objets, la réserve de mémoire ou "free store" met à disposition de l'allocateur un bloc mémoire de 64Ko. Ce bloc mémoire est partitionné en une pluralité de page chunks comme on peut le voir sur la figure 4. En fonction de la plateforme (système d'exploitation) utilisé, un page chunk peut être de taille 4Ko ou 8Ko, on aura ainsi 16 ou 8 page chunks dans un bloc mémoire de 64Ko. Le premier page chunk du bloc mémoire est un en-tête globale ("head chunk") comportant une indication permettant à l'allocateur de détecter qu'il s'agit d'un bloc mémoire pour petits objets. Comme on le voit sur la figure 4, chaque page chunk comporte un en-tête interne ("chunk header") dans laquelle on trouve des données relatives :
- à la taille des objets présents dans le page chunk,
- un adressage pages ("mapped pages"),
- le page chunk précédent et suivant,
- l'objet en cours,
- l'objet libre, et
- les objets alloués.

La partie restante du page chunk est une partie de data comprenant plusieurs petits blocs mémoires de même taille. Chaque petit bloc mémoire est libre ou renferme un objet.

En ce qui concerne l'allocation d'un petit objet.

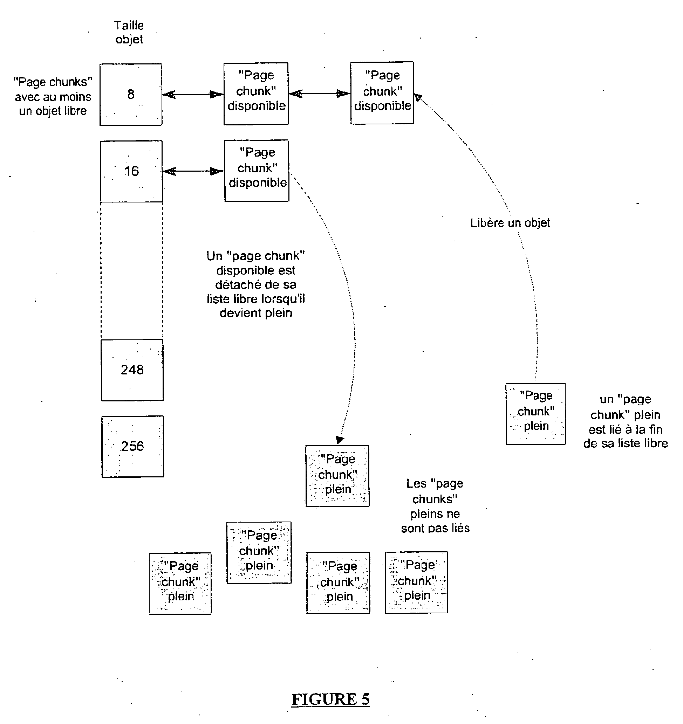

L'allocateur contient une liste libre externe pour petits objets. Cette liste libre externe est représentée sur la figure 5. Cette liste comporte pour chaque type de taille (dans la limite de la définition de petite taille, c'est à dire < 256 octets), on établit un lien vers une première page chunk disponible, ce dernier comporte également un lien vers un éventuel second page chunk disponible, et ainsi de suite. Chaque page chunk peut donc être doublement lié. Le premier page chunk *i* peut donc être le premier élément d'une liste de page chunks disponible pour la même classe de taille *i × 8.* Chaque page chunk comprend par ailleurs une liste libre interne relative aux liens entre objets et petits blocs mémoire libres.

Si la liste libre externe n'est pas vide, l'allocateur utilise le pointeur sur l'objet courant dans le premier page chunk pour obtenir un objet libre. Le nombre d'objets est incrémenté et le pointeur sur l'objet courant est incrémenté. Si c'était le dernier objet libre du page chunk, on détruit le lien à ce page chunk. Si la liste libre externe est vide, un nouveau page chunk est retiré auprès de la réserve de mémoire ("free store") pour allouer l'objet. Le page chunk est alors mis dans la liste libre externe.

En ce qui concerne la libération d'objet.

Etant donné l'adresse de l'objet, l'allocateur calcule l'adresse de début du bloc mémoire concerné en faisant : adresse de l'objet modulo 64Ko (puisque les blocs mémoire sont alignés sur les limites de mémoire 64Ko). La valeur à cette adresse, en cas de petit objet, est plus petite que 256 parce que c'est l'adresse du "head chunk", et le premier attribut stocké dans un page chunk est une taille d'objet, inférieure à 256. L'allocateur calcule l'adresse du page chunk contenant l'objet libéré : adresse objet modulo taille de page chunk. La taille d'objet est obtenue à partir de l'en-tête du page chunk. L'objet libéré est alors lié à la liste libre interne du page chunk, et le nombre d'objets est décrémenté. Si le page chunk devient vide, il est délié de la liste libre externe de petits objets et il retourne à la réserve de mémoire. La réserve de mémoire utilise un attribut spécifique dans le page chunk ("adressage pages" sur la figure 4) pour déterminer si tous les page chunks dans le bloc mémoire de 64Ko sont vides ou non-adressés. Auquel cas, l'ensemble du bloc mémoire peut être retourné vers le système d'exploitation.

On va maintenant décrire la gestion de grands objets.

En ce qui concerne la structure.

Pour de grands objets, on utilise une seule région mémoire de taille fixe, dite chunk. En d'autres termes, chaque bloc mémoire 64Ko en provenance du "free store" est transformé en un seul chunk. Ce chunk peut contenir de grands objets de classes de taille différentes. On a donc besoin d'un mécanisme d'assemblage de petits blocs mémoire. Selon la présente invention, l'algorithme d'assemblage n'est pas basé sur des liens établis dans des listes ou des arbres binaires comme dans l'art antérieur, mais sur le champ de bits.

Chaque chunk pour grands objets contient un champ de bits. Chaque bit dans ce champ donne l'état d'un bloc mémoire 8-octets : 0 si libre, 1 si utilisé. Ceci permet un assemblage efficace et rapide, sans balayage de listes comme dans l'art antérieur.

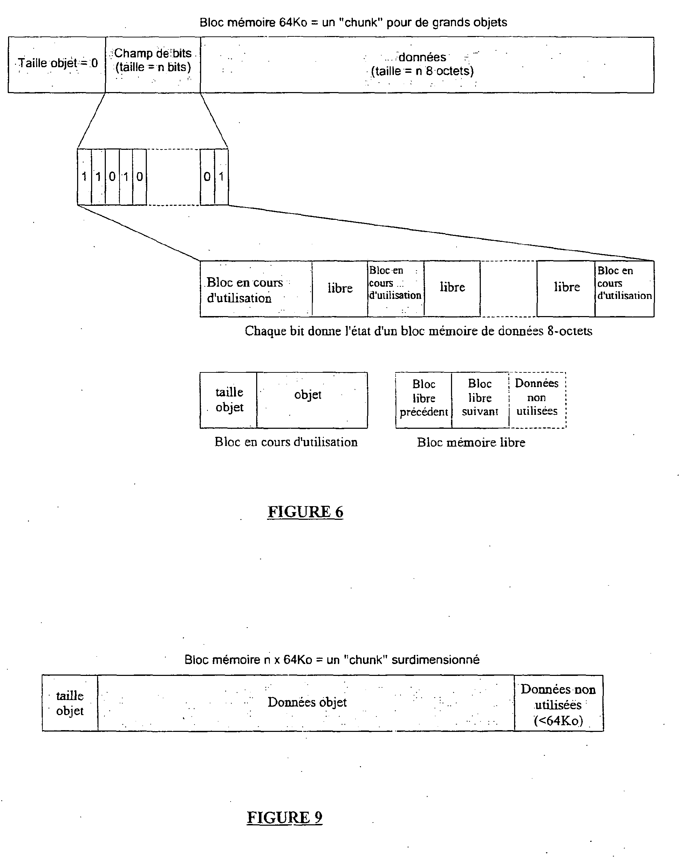

Sur la figure 6 est représentée la structure d'un chunk 64Ko. Puisqu'un chunk pour grands objets mélange différentes classes de taille, la taille d'objet est stockée en en-tête de chaque grand objet alloué. Chaque petit bloc mémoire en cours d'utilisation comporte un en-tête et une partie data renfermant l'objet en cours d'utilisation. Chaque petit bloc mémoire libre comporte un lien vers un bloc libre précédent et un lien vers un bloc libre suivant, et une partie data non utilisée (libre).

En ce qui concerne l'allocation d'objet.

Comme les grands objets exigent un en-tête pour stocker leur taille, on ajoute la taille de l'en-tête à la taille de l'objet et on arrondit la taille de l'objet à I a limite du prochain bloc 8-octets. Une meilleure recherche de correspondance est exécutée sur une liste libre externe répertoriant pour chaque taille un éventuel lien vers un bloc mémoire de même taille disponible. La recherche démarre à partir de la taille de l'objet :
- en cas de correspondance exacte, le bloc libre est délié de la liste libre et utilisé pour allouer l'objet,
- si on trouve un bloc libre plus grand, ce bloc libre est délié et scindé. Le reste est lié à la liste libre correspondante,
- s'il n'y a aucun bloc libre de taille supérieure disponible, on crée un nouveau chunk pour grands objets en demandant une mémoire tampon 64Ko depuis la réserve de mémoire. Ce nouveau chunk contient un unique grand bloc libre, et le champ de bits est rempli de zéros. Ce grand bloc libre est scindé (à moins que la taille d'objet soit exactement (n - 1) x 8 octets) et le reste est lié à la liste libre correspondante.

Lorsqu'un bloc mémoire a été trouvé, les bits correspondants dans le champ de bits sont tous placés à 1.

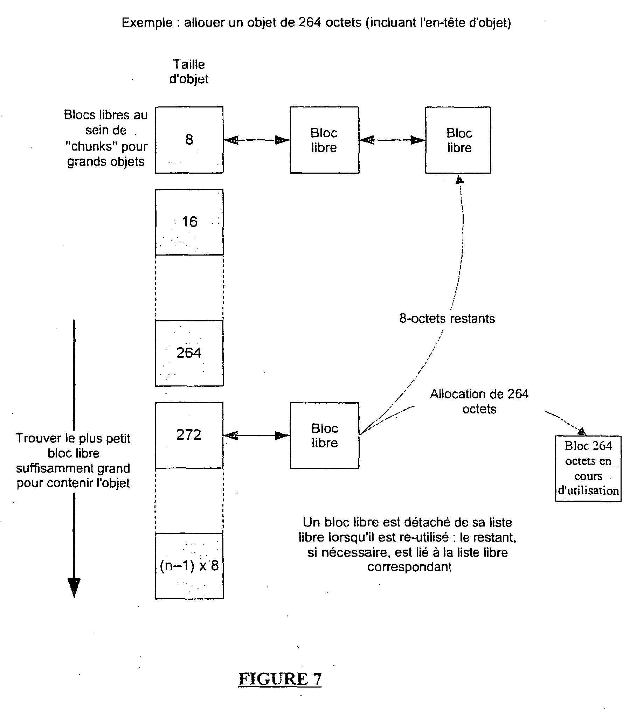

Sur la figure 7 on voit un exemple d'allocation d'un objet de 264 octets. Pour la taille de 264 octets, la liste libre ne comprend aucun bloc libre. On se rabat alors sur la taille immédiatement supérieure de 272 octets. Là un bloc libre est disponible. On utilise donc ce bloc libre, et les 8 octets restants constituent un bloc libre qui est lié à la suite des blocs libres de même taille.

En ce qui concerne la libération.

Lorsque l'allocateur libère un grand objet, il obtient d'abord la taille de l'objet depuis l'en-tête de l'objet et assemble ensuite ce nouveau bloc libre avec les blocs libres adjacents. Il utilise le champ de bits pour identifier ces blocs libres adjacents. Pour ce faire, on recherche le précédent ou le suivant bit à "1" dans le champ de bits en sautant des mots nuls. Une itération déplace le curseur en avant ou en arrière 32 x 8 = 256 octets dans la mémoire. Lorsqu'on trouve un mot non nul, le problème consiste à trouver le premier (ou dernier) bit à "1" dans ce mot. Pour cela, on utilise avantageusement une méthode efficace et transférable : cette méthode utilise les séquences de De Bruijn pour indexer un "1" dans un mot informatique.

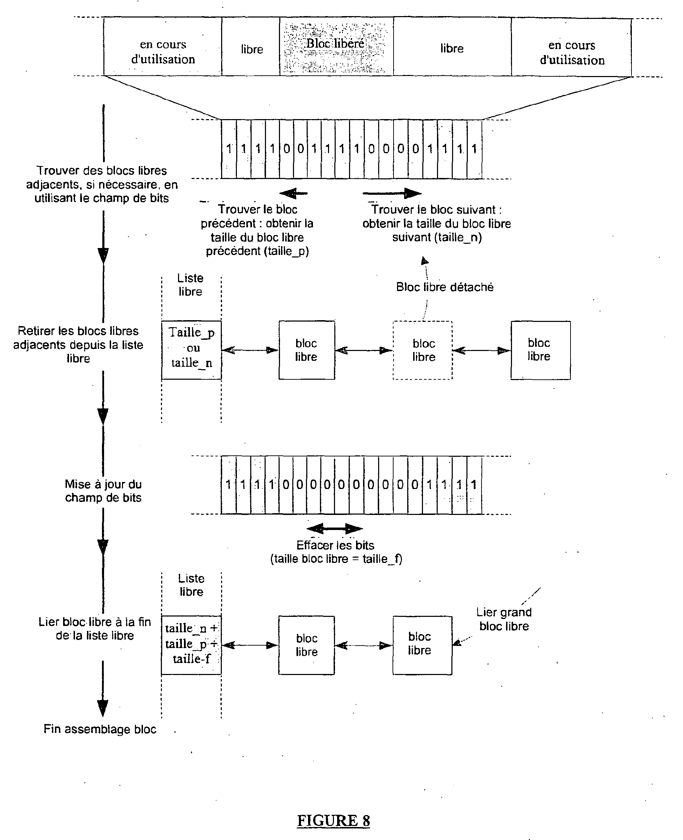

Sur la figure 8 on voit une méthode d'assemblage de blocs mémoire libres. Le bloc mémoire libéré est entouré de deux blocs libres. On parcourt le champ de bits pour trouver les blocs libres adjacents. On enlève ces blocs libres de la liste libre. On met à jour le champ de bits puis on lie, à la fin de la liste libre, le nouveau bloc mémoire formé de l'assemblage ou fusion des trois blocs libres.

En fait, l'allocateur contient deux "free list" ou vecteur de listes chaînées de bloc mémoire : une pour les petits objets (liste de "page chunks"), et une pour les grands objets (liste d'emplacements mémoire libres pour chaque taille d'objet). Ces vecteurs sont initialisés statiquement, au démarrage du processus utilisant l'allocateur. Avantageusement, les listes (une pour chaque élément du vecteur) sont chaînées dans les deux sens, afin de permettre la suppression d'un chunk sans parcourir toute la liste.

On va maintenant décrire la gestion de très grands objets.

En ce qui concerne la structure.

Un très grand objet est alloué depuis un chunk surdimensionné, construit en utilisant un bloc mémoire surdimensionné, c'est à dire un bloc mémoire de taille supérieure à 64Ko. Il y a un chunk surdimensionné pour chaque très grand objet. Sur la figure 9 on voit un tel chunk avec un en-tête renfermant la taille de l'objet, une partie data renfermant l'objet et une partie data non utilisée à la fin du chunk surdimensionné.

En ce qui concerne l'allocation d'objet.

Pour un très grand objet, l'allocateur demande un bloc mémoire surdimensionné depuis la réserve de mémoire. De tels blocs mémoire ne sont pas pré-affectés.

En ce qui concerne la libération de l'objet.

Lorsque l'allocateur libère un très grand objet, le bloc mémoire surdimensionné est libéré, et on renseigne la réserve de mémoire de sorte que la mémoire retourne vers le système d'exploitation dès que possible.

La présente invention concerne donc un système de gestion mémoire d'un processus élaboré en langage C/C++ dans une unité de traitement. Ce système comprend un allocateur qui traite des blocs mémoires de taille prédéterminée, par exemple 64Ko. On définit des grands objets comme étant des objets de taille comprise entre 256 et 64Ko. Pour de tels objets, chaque bloc mémoire 64Ko est considéré comme une région mémoire apte à recueillir plusieurs grands objets de tailles différentes. Lorsqu'un objet n'est plus utilisé par le processus, l'espace libéré est susceptible d'être renvoyé vers le système d'exploitation. Avant cela, on fusionne cet espace libre avec des espaces libres adjacents. Pour la recherche des espaces libres adjacents, on utilise l'algorithme des séquences de Bruijn appliqué au champ de bits disposé dans chaque région mémoire prédéterminée.

Bien sûr, l'invention n'est pas limitée aux exemples qui viennent d'être décrits et de nombreux aménagements peuvent être apportés à ces exemples sans sortir du cadre de l'invention.

## Revendications

1. Système de gestion mémoire d'un processus élaboré en langage C/C++ dans une unité de traitement, ce système comprenant :
Un allocateur apte à allouer des espaces mémoires pour des objets utilisés par le processus et à libérer des espaces mémoires non utilisés par le processus vers le système d'exploitation de l'unité de traitement;
Un mécanisme asynchrone apte à définir une zone tampon constituée d'un ensemble de blocs mémoires disponibles pour le processus, tous les blocs mémoires dudit mécanisme étant de même taille égale à m*32Ko, avec m compris entre 1 et 4;
Chaque bloc mémoire de m*32Ko, en provenance dudit mécanisme et utilisé par le processus, est géré sous forme de régions mémoire selon la technique de gestion de mémoire « chunk » par l'allocateur; pour de grands objets dont la taille est comprise dans une plage de tailles prédéterminée, chaque bloc mémoire de m*32Ko est considéré comme une région mémoire « chunk » multi-tailles renfermant plusieurs desdits grands objets de différentes tailles, ladite région mémoire « chunk » multi-tailles comportant un en-tête indiquant qu'il s'agit d'une région mémoire « chunk » renfermant de grands objets, un champ de bits ou "bit fields", et une zone de données comprenant des petits blocs mémoire en cours d'utilisation et de petits blocs mémoires libres, les petits blocs mémoire de la région mémoire « chunk » multi-tailles étant tous de même taille; l'allocateur comprenant des moyens de mise en oeuvre de l'algorithme de Bruijn en combinaison avec la technique de champ de bits pour déterminer des blocs adjacents libres lors de la libération d'un petit bloc mémoire par le processus.

2. Système selon la revendication 1, **caractérisé en ce que** le mécanisme asynchrone comprend des moyens pour réserver un bloc mémoire de m*32Ko lorsqu'un seuil minimum du nombre de blocs mémoire est dépassé, et des moyens pour libérer vers le système d'exploitation des blocs mémoire de m*32Ko lorsqu'un seuil maximum du nombre de blocs mémoire est dépassé.

3. Système selon la revendication 1 ou 2, **caractérisé en ce que** m est égale à 2.

4. Système selon l'une quelconque des revendications précédentes, **caractérisé en ce que** chaque petit bloc mémoire présente une taille de 8 octets.

5. Système selon l'une quelconque des revendications précédentes, **caractérisé en ce que** chaque petit bloc mémoire en cours d'utilisation par le processus comporte une zone renfermant l'objet en cours d'utilisation et un en-tête indiquant la taille dudit objet en cours d'utilisation.

6. Système selon l'une quelconque des revendications précédentes, **caractérisé en ce que** chaque petit bloc mémoire libre comporte un lien vers le petit bloc mémoire libre précédent, un lien vers le petit bloc mémoire suivant, et un espace mémoire libre pour des données.

7. Système selon l'une quelconque des revendications précédentes, **caractérisé en ce qu'**il comprend en outre une liste dite liste libre de grands objets, dans laquelle sont répertoriés, pour chaque taille de ladite plage de tailles prédéterminée, des liens vers des petits blocs mémoire libres dans des régions mémoires « chunks » multi-tailles.

8. Système selon l'une quelconque des revendications précédentes, **caractérisé en ce que** ladite plage de tailles prédéterminée consiste en une plage telle que 256 octets< taille objet ≤ à m*32Ko.

9. Système selon la revendication 8, **caractérisé en ce que** pour des petits objets dont la taille est inférieure ou égale à 256 octets, chaque bloc mémoire de m*32Ko devant être utilisé est subdivisé en une pluralité de segments mémoires fixes dits « page chunks »; chaque segment mémoire fixe « page chunk » comportant un en-tête renfermant la taille des objets et une indication du caractère vide ou non du segment mémoire fixe « page chunk », et plusieurs petits blocs mémoires de même taille, chaque petit bloc mémoire étant libre ou rempli d'objet.

10. Système selon la revendication 9, **caractérisé en ce qu'**il comprend en outre une première liste libre de petits objets associée à l'ensemble de segments mémoires fixes « page chunks » de telle sorte que pour chaque taille d'objet des liens vers des petits blocs mémoire libres sont établis, et **en ce qu'**il comprend en outre pour chaque segment mémoire fixe « page chunk », une seconde liste libre interne de petits objets, cette liste libre interne comprenant des liens entre objets et petits blocs mémoires libres au sein d'un même segment mémoire fixe « page chunk »; lesdites première et seconde listes libre de petits objets sont gérées par l'allocateur pour l'allocation et la libération de mémoire.

11. Système selon la revendication 9 ou 10, **caractérisé en ce que** pour libérer un objet, l'allocateur comprend des moyens pour réaliser l'opération adresse de l'objet à libérer modulo m*32Ko de façon à en déduire la taille dudit objet à libérer.

12. Système selon l'une quelconque des revendications 9 à 11, **caractérisé en ce que** l'allocateur comprend des moyens pour libérer un bloc mémoire de m*32Ko vers le système d'exploitation lorsque l'ensemble des segments mémoires fixes « page chunks » de ce bloc mémoire sont vides.

13. Système selon l'une quelconque des revendications précédentes, **caractérisé en ce que** pour de très grands objets de tailles supérieures à m*32Ko, l'allocateur comprend des moyens pour prélever depuis le mécanisme asynchrone plusieurs blocs mémoire de taille m*32Ko chacun de façon à former une région mémoire « chunk » surdimensionnée, chaque région mémoire « chunk » surdimensionnée comportant un en-tête signalant qu'il s'agit d'une région mémoire « chunk » comportant un objet de très grande taille.

## Claims

1. Memory management system for a process formulated in the C/C++ language in a processing unit, this system comprising:
an allocator, which is capable of allocating memory spaces for the objects which the process uses, and of freeing memory spaces which the process does not use to the operating system of the processing unit;
an asynchronous mechanism, which is capable of defining a buffer zone consisting of a set of memory blocks which are available for the process, all the memory blocks of said mechanism being of the same size, equal to m*32 kilobytes, where m is between 1 and 4;
each memory block of m*32 kilobytes, originated from said mechanism and used by the process, is managed by the allocator in the form of memory regions, according to the "chunk" memory management technique; for large objects, the size of which is within a predetermined size range, each memory block of m*32 kilobytes is considered as a multi-size memory region (chunk), which includes several of said large objects of different sizes, said multi-size memory region (chunk) containing a header indicating that this is a memory region (chunk) including large objects, a bit field, and a data area comprising small memory blocks in the course of usage and free small memory blocks, the small memory blocks of the multi-size memory region (chunk) being all of the same size; the allocator comprising means of implementing the de Bruijn algorithm, in combination with the bit field technique, to determine the adjacent free blocks, when the process frees a small memory block.

2. System according to claim 1, **characterized in that** the asynchronous mechanism comprises means for reserving a memory block of m*32 kilobytes when a minimum threshold of the number of memory blocks is passed, and means for freeing memory blocks of m*32 kilobytes to the operating system when a maximum threshold of the number of memory blocks is overshot.

3. System according to claim 1 or 2, **characterized in that** m equals 2.

4. System according to any one of the preceding claims, **characterized in that** the size of each small memory block is 8 bytes.

5. System according to any one of the preceding claims, **characterized in that** each small memory block in the course of usage by the process contains an area which includes the object in the course of usage and a header indicating the size of said object in the course of usage.

6. System according to any one of the preceding claims, **characterized in that** each free small memory block contains a link to the preceding free small memory block, a link to the following small memory block, and a free memory space for data.

7. System according to any one of the preceding claims, **characterized in that** it also comprises a list, called the free list of large objects, in which are listed, for each size of said predetermined range of sizes, links to free small memory blocks in the multi-size memory regions (chunks).

8. System according to any one of the preceding claims, **characterized in that** said predetermined range of sizes consists of a range such that 256 bytes < object size ≤ m*32 kilobytes.

9. System according to claim 8, **characterized in that** for small objects of which the size is less than or equal to 256 bytes, each memory block of m*32 kilobytes which must be used is subdivided into multiple fixed memory segments termed "page chunks"; each fixed memory segment (page chunk) contains a header which includes the size of the objects and an indication of the character, empty or not, of the fixed memory segment (page chunk), and multiple small memory blocks of the same size, each small memory block being free or filled with an object.

10. System according to claim 9, **characterized in that** it also comprises a first free list of small objects associated with the set of fixed memory segments (page chunks), such that for each object size, links to free small memory blocks are established, and **in that** it also comprises, for each fixed memory segment (page chunk), a second internal free list of small objects, this internal free list comprising links between objects and free small memory blocks within the same fixed memory segment (page chunk); said first and second free lists of small objects are managed by the allocator for allocating and freeing memory.

11. System according to claim 9 or 10, **characterized in that** to free an object, the allocator comprises means for implementing the operation of addressing the object to be freed modulo m*32 kilobytes, in such a way as to deduce from it the size of said object to be freed.

12. System according to any one of claims 9 to 11, **characterized in that** the allocator comprises means for freeing a memory block of m*32 kilobytes to the operating system when the set of fixed memory segments (page chunks) of this memory block are empty.

13. System according to any one of the preceding claims, **characterized in that** for huge objects of sizes greater than m*32 kilobytes, the allocator comprises means of fetching from the asynchronous mechanism several memory blocks of m*32 kilobytes, each of a kind to form an oversized memory region (chunk), and each oversized memory region (chunk) containing a header which signals that this is a chunk which contains a huge object.

## Patentansprüche

1. Speicherverwaltungssystem eines in der Sprache C/C++ in einem Rechenwerk verarbeiteten Prozesses, wobei dieses System Folgendes umfasst:
einen Zuordner, der in der Lage ist, Speicherplätze für Objekte zuzuordnen, die durch den Prozess verwendet werden, und Speicherplätze, die nicht durch den Prozess verwendet werden, zum Betriebssystem des Rechenwerks freizugeben;
ein asynchroner Mechanismus, der in der Lage ist, einen Pufferbereich zu definieren, der aus einer Gruppe von Speicherblöcken besteht, die für den Prozess verfügbar sind, wobei alle Speicherblöcke des Mechanismus von gleicher Größe gleich m*32KB sind, wobei m zwischen 1 und 4 enthalten ist;
jeder Speicherblock von m*32KB, der aus dem Mechanismus kommt und durch den Prozess verwendet wird, wird durch den Zuordner gemäß der "Chunk-Speicherverwaltungstechnik" unter der Form von Speicherbereichen verwaltet; für große Objekte, deren Größe in einem Bereich von vorbestimmten Größen enthalten ist, wird jeder Speicherblock von m*32KB als ein "Chunk-Speicherbereich" mit mehreren Größen betrachtet, der mehrere der großen Objekte von unterschiedlichen Größen einschließt, wobei der "Chunk-Speicherbereich" mit mehreren Größen einen Kopf umfasst, der angibt, dass es sich um einen "Chunk-Speicherbereich" handelt, der große Objekte, ein Bitfeld oder "bit field", und einen Datenbereich einschließt, der kleine Speicherblöcke, die gegenwärtig verwendet werden, und freie kleine Speicherblöcke umfasst, wobei die kleinen Speicherblöcke des "Chunk-Speicherbereichs" mit mehreren Größen alle von der gleichen Größe sind; wobei der Zuordner Mittel zur Durchführung des Bruijn-Algorithmus in Verbindung mit der Bitfeldtechnik zur Bestimmung der benachbarten freien Blöcke bei der Freigabe eines kleinen Speicherblocks durch den Prozess umfasst.

2. System nach Anspruch 1, **dadurch gekennzeichnet, dass** der asynchrone Mechanismus Mittel zum Reservieren eines Speicherblocks von m*32KB, wenn eine Mindestschwelle der Anzahl von Speicherblöcken überschritten wird, und Mittel zum Freigeben von Speicherblöcken von m*32KB zum Betriebssystem umfasst, wenn eine Höchstschwelle der Anzahl von Speicherblöcken überschritten wird.

3. System nach Anspruch 1 oder 2, **dadurch gekennzeichnet, dass** m gleich 2 ist.

4. System nach einem der vorhergehenden Ansprüche, **dadurch gekennzeichnet, dass** jeder kleine Speicherblock eine Größe von 8 Byte aufweist.

5. System nach einem der vorhergehenden Ansprüche, **dadurch gekennzeichnet, dass** jeder kleine Speicherblock, der gegenwärtig durch den Prozess verwendet wird, einen Bereich umfasst, der das Objekt, das gegenwärtig verwendet wird, und einen Kopf einschließt, der die Größe des Objekts angibt, das gegenwärtig verwendet wird.

6. System nach einem der vorhergehenden Ansprüche, **dadurch gekennzeichnet, dass** jeder freie kleine Speicherblock eine Verbindung zum vorhergehenden freien kleinen Speicherblock, eine Verbindung zum nachfolgenden kleinen Speicherblock und einen Speicherplatz umfasst, der für Daten frei ist.

7. System nach einem der vorhergehenden Ansprüche, **dadurch gekennzeichnet, dass** es ferner eine Liste umfasst, die freie Liste großer Objekte genannt wird, in der für jede Größe des Bereichs von vorbestimmten Größen Verbindungen zu freien kleinen Speicherblöcken in "Chunk-Speicherbereichen" mit mehreren Größen verzeichnet sind.

8. System nach einem der vorhergehenden Ansprüche, **dadurch gekennzeichnet, dass** der Bereich von vorbestimmten Größen aus einem Bereich wie 256 Byte < Objektgröße ≤ bis m*32KB besteht.

9. System nach Anspruch 8, **dadurch gekennzeichnet, dass** für kleine Objekte, deren Größe kleiner oder gleich 256 Byte ist, jeder Speicherblock von m*32KB, der verwendet werden muss, in mehrere feste Speichersegmente unterteilt wird, die "Page Chunks" genannt werden; wobei jedes feste "Page-Chunk-Speichersegment" einen Kopf umfasst, der die Größe der Objekte und eine Angabe der leeren oder nicht leeren Eigenschaft des festen "Page-Chunk-Speichersegments" und mehrere kleine Speicherblöcke von gleicher Größe einschließt, wobei jeder kleine Speicherblock frei oder objektgefüllt ist.

10. System nach Anspruch 9, **dadurch gekennzeichnet, dass** es ferner eine erste freie Liste von kleinen Objekten umfasst, die der Gruppe von festen "Page-Chunk-Speichersegmenten" zugehörig ist, derart, dass für jede Objektgröße Verbindungen zu freien kleinen Speicherblöcken eingerichtet werden, und **dadurch**, dass es ferner für jedes feste "Page-Chunk-Speichersegment" eine zweite interne freie Liste von kleinen Objekten umfasst, wobei diese interne freie Liste Verbindungen zwischen Objekten und freien kleinen Speicherblöcken innerhalb eines gleichen festen "Page-Chunk-Speichersegments" umfasst; wobei die erste und zweite freie Liste von kleinen Objekten durch den Zuordner für die Speicherzuordnung und -freigabe verwaltet werden.

11. System nach Anspruch 9 oder 10, **dadurch gekennzeichnet, dass** der Zuordner zum Freigeben eines Objekts Mittel zum Ausführen der Adressoperation des freizugebenden Objekts modulo m*32KB umfasst, derart, dass die Größe des freizugebenden Objekts davon abgeleitet wird.

12. System nach einem der Ansprüche 9 bis 11, **dadurch gekennzeichnet, dass** der Zuordner Mittel zum Freigeben eines Speicherblocks von m*32KB zum Betriebssystem umfasst, wenn sämtliche festen "Page-Chunk-Speichersegmente" dieses Speicherblocks leer sind.

13. System nach einem der vorhergehenden Ansprüche, **dadurch gekennzeichnet, dass** der Zuordner für sehr große Objekte mit Größen von über m*32KB Mittel zum Abrufen mehrerer Speicherblöcke der Größe von jeweils m*32KB ausgehend vom asynchronen Mechanismus umfasst, um einen überdimensionierten "Chunk-Speicherbereich" zu bilden, der einen Kopf umfasst, der darauf hinweist, dass es sich um einen "Chunk-Speicherbereich" handelt, der ein Objekt von sehr großer Größe umfasst.
